# EUROPEAN PATENT APPLICATION

(11) **EP 4 520 951 A1**
(43) Date of publication of application: **12.03.2025**
(21) Application number: 24198328.7
(22) Date of filing: 04.09.2024
(51) Int. Cl.: F02M 21/02, F16K 31/06, F02M 51/06

(54) **FUEL INJECTOR FOR GASEOUS FUEL AND VALVE ASSEMBLY FOR THE SAME**

(30) Priority: 06.09.2023 US 202363580777 P
(71) Applicant: Cummins, Inc., Columbus, Indiana 47201 (US)
(72) Inventor: BENSON, Donald, INDIANA, 47203 (US); PHILLIPS, Ross, INDIANA, 47201 (US); PRIMUS, Raymond, INDIANA, 46106 (US); SONG, Jin, INDIANA, 47401 (US); SHAULL, Anthony, INDIANA, 47203 (US); LASKA, Andrew, INDIANA, 47201 (US); SABRI, Ahmad, INDIANA, 47201 (US); BENSON, David, INDIANA, 47203 (US)
(74) Representative: Cleveland Scott York

(57) **Abstract**

A fuel injector for gaseous fuel is provided. The fuel injector includes at least one valve having a valve seat and a plunger that engages the seat to prevent gaseous fuel flow and is displaced from the seat to permit gaseous fuel flow. Displacement of the plunger away from the seat to open the at least one valve is resisted by a first plunger control mechanism and then a second plunger control mechanism depending on the distance the plunger is lifted from the seat.

## Description

### Cross-reference to related application:

The present application claims priority to, and the benefit of the filing date of, U.S. Provisional Application Ser. No. 63/580,777 filed on September 6, 2023, which is incorporated herein by reference in its entirety.

### FIELD OF THE DISCLOSURE

The present disclosure relates generally to a fuel injector for providing gaseous fuel for an internal combustion engine and, more particularly, to a valve assembly for a fuel injector for gaseous fuel.

### BACKGROUND

It is desirable for fuel injectors for gaseous fuel operated engines to be able to inject gaseous fuel into the combustion chambers of the engine at precisely controlled quantities, rates, and timing. At the start of injection for gaseous fuel injectors, there is a rapid gain or increase in the injected quantity of gaseous fuel. This results from the ballistics of the axial travel of the plunger during opening of the fuel injector valve, and the delay in closing the valve following the end of the commanded on time of the fuel injector.

Rapid gain of injection quantity at the start of the valve opening for gaseous fuel injectors is significantly greater than the gain of injection quantity at higher injection amounts, which occur while the valve remains open. As a result, gaseous fuel injectors tend to have high variation between injection events and between injectors. In addition, the rapid gain in the injection quantity at the start of injection tends to make the fuel injector less robust and more sensitive to other forces acting on the fuel injector, such as mechanical friction.

Gaseous fuel injectors can also result in an undesirable decrease or reduction in the injected quantity of gaseous fuel for extended on times. This can be caused by rebounding of the plunger against the control surface of the fuel injector that limits the displacement of the plunger in the fuel injector. The mechanical rebounding of the plunger promotes an earlier closing of the fuel injector valve and a reduced injection quantity. Therefore, there remains a need for the unique apparatuses, systems, and techniques disclosed herein.

### DISCLOSURE OF ILLUSTRATIVE EMBODIMENTS

For the purposes of clearly, concisely and exactly describing illustrative embodiments of the present disclosure, the manner, and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created and that the invention includes and protects such alterations, modifications, and further applications of the exemplary embodiments as would occur to one skilled in the art.

### SUMMARY

The present disclosure includes a fuel injector for providing gaseous fuel to a combustion chamber. The fuel injector includes an injector body defining a fuel passage therein. The fuel passage extends from a gas inlet to a gas outlet of the injector body. The fuel injector includes a valve assembly at least partially located in the fuel passage. The valve assembly includes at least one valve that is selectively opened and closed to control gaseous fuel flow through the fuel passage to the combustion chamber. The at least one valve includes a valve seat in the fuel passage. The at least one valve also includes a plunger that contacts the valve seat to close the at least one valve, and the plunger is displaced from the valve seat to open the at least one valve. First and second plunger control mechanisms resist displacement of the plunger away from the valve seat. The first and second plunger control mechanisms are configured to increase resistance to displacement of the plunger from the valve seat during opening of the at least one valve.

In an embodiment, a valve assembly is disclosed for a fuel injector to selectively provide gaseous fuel flow. The valve assembly includes a valve seat including an opening to allow gaseous fuel flow through the opening. The valve assembly also includes a plunger that is movable to engage the valve seat to prevent gaseous fuel flow through opening and to disengage the valve seat to permit gaseous fuel flow through the valve seat. The valve assembly also includes a first plunger control mechanism engaged to the plunger. The first plunger control mechanism is configured to resist displacement of the plunger away from the valve seat during opening of the valve assembly, and to bias the plunger against the valve seat to close the valve assembly. The valve assembly further includes a second plunger control mechanism spaced from the plunger when the plunger is engaged to the valve seat. The second plunger control mechanism engages the plunger after the plunger is displaced away from the valve seat to work with the first plunger control mechanism to resist displacement of the plunger away from the valve seat during opening of the valve assembly.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The description herein makes reference to the accompanying drawings wherein like numerals refer to like parts throughout the several views, and wherein:
FIG. 1 is a schematic view of a fuel injection system.
FIG. 2 is schematic section view of a fuel injector in a closed condition according to an embodiment of the present disclosure.
FIG. 3 is the fuel injector of FIG. 2 in an open condition.
FIG. 4 is schematic section view of a fuel injector in a closed condition according to another embodiment of the present disclosure.
FIG. 5 is the fuel injector of FIG. 4 in an open condition.
FIG. 6 is a longitudinal section view of a fuel injector according an embodiment of the present disclosure.
FIG. 7 is a longitudinal section view of a valve assembly that can be implemented in the fuel injector of FIG. 6 according to an embodiment of the present disclosure.
FIG. 8 is a longitudinal section view of a valve assembly that can be implemented in the fuel injector of FIG. 6 according to another embodiment of the present disclosure.
FIG. 9 is a longitudinal section view of a valve assembly that can be implemented in the fuel injector of FIG. 6 according to another embodiment of the present disclosure.
FIG. 10 is a longitudinal section view of a fuel injector with a valve assembly according another embodiment of the present disclosure.

### DETAILED DESCRIPTION OF ILLUSTRATIVE EMBODIMENTS

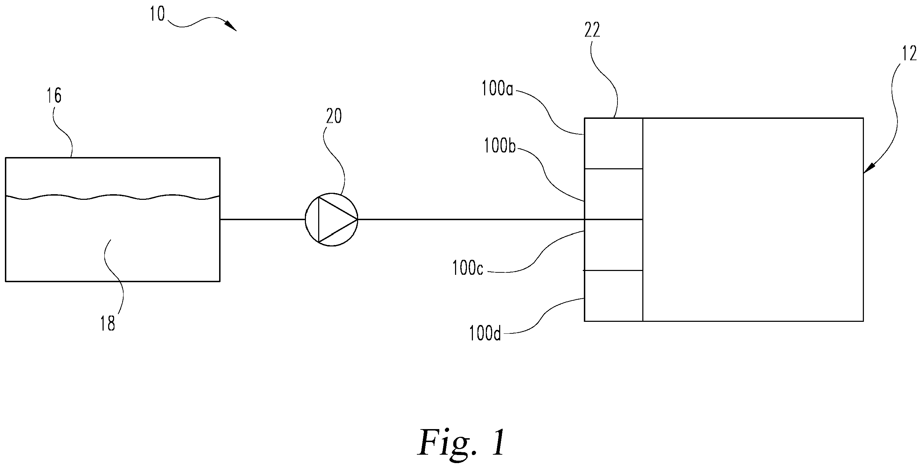

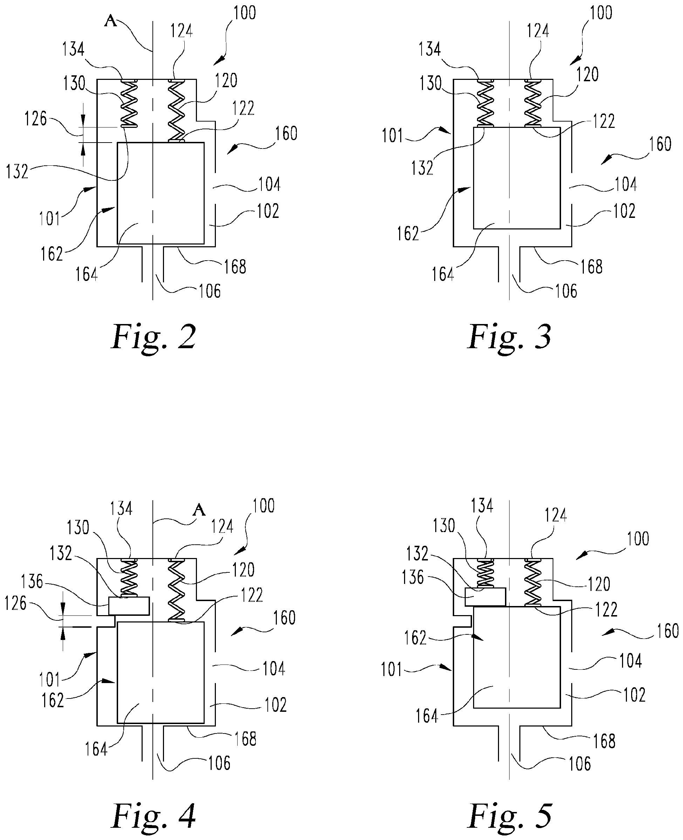

With reference to FIG. 1, there is illustrated a fuel injection system 10 including at least one fuel injector 100a, 100b, 100c ... 100n for a respective combustion chamber 14 of an internal combustion engine 12. The at least one fuel injector 100a, 100b, 100c ... 100n is in fluid communication with a fuel source 16 containing a gaseous fuel 18, and a fuel tank/regulator 20 and/or common rail 22 to distribute fuel to the injectors 100a, 100b, 100c ... 100n. Although multiple fuel injectors are shown schematically in FIG. 1, system 10 may include any number of fuel injectors, including one fuel injector. Pressurized gaseous fuel 18 is supplied to each of the fuel injectors 100a, 100b, 100c ... 100n from the fuel tank/regulator 20. In the discussion that follows, fuel injectors 100a, 100b, 100c ... 100n are described with reference to a fuel injector 100, such as shown in FIGs. 2-10.

In an embodiment, the fuel injector 100 provides gaseous fuel 18 to combustion chamber 14. The fuel injector 100 includes an injector body 101 defining a fuel passage 102 therein. The fuel passage 102 extends from a gas inlet 104 to a gas outlet 106 of the body 101. The fuel injector 100 includes a valve assembly 160 at least partially located in the fuel passage 102. The valve assembly 160 includes at least one valve 162 that is selectively opened and closed to control gaseous fuel flow through the fuel passage 102 to the combustion chamber 14.

The at least one valve 162 includes a valve seat 168 in the fuel passage 102. The at least one valve 162 also includes a plunger 164 that contacts the valve seat 168 to close the at least one valve 162, and the plunger 164 is displaced from the valve seat 168 to open the at least one valve 162. The valve 162 includes a first plunger control mechanism 120 and a second plunger control mechanism 130. First and second plunger control mechanisms 120, 130 resist displacement of the plunger 164 away from the valve seat 168. The first and second plunger control mechanisms 120, 130 are configured to increase resistance to displacement of the plunger 164 from the valve seat 168 during opeing of the at least one valve 162 based on a distance of the plunger 164 from the valve seat 168.

In an embodiment, valve assembly 160 is disclosed for fuel injector 100 to selectively provide gaseous fuel flow. The valve assembly 160 includes valve seat 168 including an opening 210 to allow gaseous fuel flow through the opening 210. The valve assembly 160 also includes plunger 164 that is movable to engage the valve seat 168 to prevent gaseous fuel flow through opening 210 and to disengage the valve seat 168 to permit gaseous fuel flow through the valve seat 164. The valve assembly 160 also includes first plunger control mechanism 120 engaged to the plunger 164. The first plunger control mechanism 120 is configured to resist displacement of the plunger 164 away from the valve seat 168 during opening of the valve assembly 160, and to bias the plunger 164 against the valve seat 168 to close the valve assembly 160. The valve assembly 160 also includes second plunger control mechanism 130 configured to not resist movement of the plunger 164 from engagement with the valve seat 168. The second plunger control mechanism 130 resists the plunger 164 after the plunger 164 is displaced away from the valve seat 168 to work with the first plunger control mechanism 120 to resist displacement of the plunger 164 away from the valve seat 168 during opening of the valve assembly 160.

Referring to FIGs. 2-5, an exemplary injector body 101 for an embodiment of fuel injector 100 extends along a longitudinal axis A and includes fuel passage 102 that is defined by the injector body 101. Fuel passage 102 provides a gaseous fuel flow path from gas inlet 104 to gas outlet 106. In the illustrated embodiment, gas inlet 104 is a sidewall inlet of injector body 101 that is transverse to longitudinal axis A. Gas outlet is located a distal end of injector body 101 and is located on, or extends along, longitudinal axis A. In the present disclosure, "proximal" or "proximally" refer to an axial location or upstream direction away from gas outlet 106, and "distal" or "distally" refers to an axial location or downstream direction toward gas outlet 106.

The fuel passage 102 receives valve assembly 160 therein to control gaseous fuel flow from gas inlet 104 to gas outlet 106. Valve assembly 160 may also control combustion gas flow from gas outlet 106 into fuel passage 102. Valve assembly 160 may include one or more valves to control gaseous fuel flow from and/or into fuel passage 102. For example, valve assembly 160 may include a second valve spaced longitudinally from valve 162.

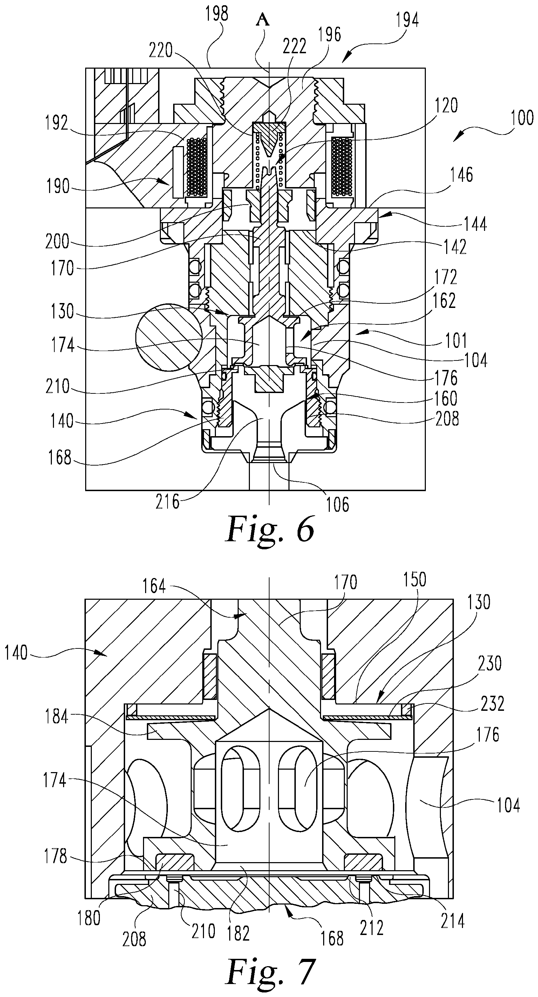

In the illustrated embodiment, valve assembly 160 includes valve 162 having a plunger 164 and a valve seat 168. An end face of plunger 164 includes a seal 180 (see FIG. 7, for example) that sealing engages valve seat 168 when injector 100 is in the closed position, as shown in FIGs. 2 and 4. Gas outlet 106 is opened by axially displacing plunger 164 away from valve seat 168, as shown in FIGs. 3 and 5. Other embodiments contemplate that valve seat 168 is a radially positioned seat that is sealed by one or more seals that extends around that outer sidewall of plunger 164.

In the illustrated embodiments, plunger 164 moves proximally away from valve seat 168 to open valve 162. In other embodiments, plunger 164 moves distally away from valve seat 168 to open valve 162. In still other embodiments, valve seat 168 may be displaced from plunger 164 to open valve 162.

Fuel injector 100 further includes one or more plunger control mechanisms 120, 130 that resist axial displacement of plunger 164 to open gas outlet 106 and/or bias plunger 164 into sealing engagement with valve seat 168 to close gas outlet 106. As used herein, the plunger control mechanisms 120, 130 may act directly on plunger 164, and/or may act on one or more components connected to or that move with movement of plunger 164, such as an armature, washer, spacer, spring, etc.

In FIGs. 2-5, first plunger control mechanism 120 is coupled between injector body 101 and plunger 164. First plunger control mechanism 120 includes a first end 122 that may be engaged directly to plunger 164 or engaged to one or more components engaged to plunger 164, such as an armature. First plunger control mechanism 120 includes an opposite second end 124 that may be engaged directly to injector body 101 or to one or more components engaged to injector body 101.

The first end 122 of first plunger control mechanism 120 moves with movement of plunger 120 in response to actuation of plunger 164, and the second end 124 of first plunger control mechanism 120 is fixed relative to injector body 101. First plunger control mechanism 120 includes at least one biasing element that is configured to provide a variable force resistance to displacement of plunger 164. First plunger control mechanism 120 is active at all lift or displacement positions of plunger 164 relative to valve seat 168. The force of resistance provided by first plunger control mechanism 120 can increase as plunger 164 is displaced further from valve seat 168.

Fuel injector 100 also includes a second plunger control mechanism 130 that is engaged to injector body 101. Second plunger control mechanism 130 includes a first end 132 that is spaced from plunger 164 by a gap 126 when plunger 164 is positioned in engagement with valve seat 168. In an embodiment, such as shown in FIG. 3-4, the first end 132 of second plunger control mechanism 122 includes a second plunger 136 that is supported directly or indirectly by injector body 101. Second plunger control mechanism 122 includes an opposite second end 134 that may be engaged directly to injector body 101 or to one or more components engaged to injector body 101.

The first end 132 and/or second plunger 136 of second plunger control mechanism 130 does not move with, or does not resist movement of, plunger 164 upon initial actuation of plunger 120 to displace it from valve seat 168. Therefore, only first plunger control mechanism 120 resists initial displacement of plunger 164. When plunger 164 has travelled from valve seat 168 by a distance corresponding to gap 126 as shown in FIGs. 3 and 5, the first end 132 and/or second plunger 136 of second plunger control mechanism 122 contacts plunger 164. Second plunger control mechanism 130 includes at least one biasing element that is configured to provide a second variable force resistance to displacement of plunger 164 once gap 126 is eliminated that supplements or adds to the resistance provided by first plunger control mechanism 120. Second plunger control mechanism 122 is therefore only active while plunger 164 is spaced from valve seat 168 by a distance that is at least as great as gap 126.

First plunger control mechanism 120 can include, for example, one or more biasing elements that resist displacement of plunger 164 and bias plunger 164 toward valve seat 168. The one or more biasing elements may include, for example, springs, coil springs, wave springs, plungers, dampeners, shims, disks, washers, Belleville washers spacers, and/or other devices that resist, work separately, or work together to control displacement of plunger 164 away from valve seat 168 in response to a fuel injection command.

Second plunger control mechanism 130 can include, for example include, for example, one or more biasing elements that resist displacement of plunger 164 and bias plunger 164 toward valve seat 168 after plunger 164 is displaced from valve seat 168. The one or more biasing elements can include, for example, springs, coil springs, wave springs, plungers, dampeners, shims, disks, washers, Belleville washers spacers, and/or other devices that resist, work separately, or work together to control displacement of plunger 164 away from valve seat 168 after plunger 164 has been initially separated from valve seat 168 in response to a fuel injection command.

Referring to FIG. 6, an exemplary embodiment of gaseous fuel injector 100 is shown in which valve assembly 160 including the plunger control mechanisms 120, 130 described herein can be implemented. Fuel injector 100 includes injector body 101. Injector body 101 can be comprised of multiple parts that are coupled to one another to form injector body 101. In the illustrated embodiment, injector body 101 includes a valve assembly receiving part 140 extending from gas outlet end 106 at a distal end thereof to a proximal end 142, and an actuator mounting part 144 that receives proximal end 142 and is coupled to valve assembly receiving part 140. Other embodiments contemplate an injector body 101 made from a single body part, or from more than two body parts.

Actuator mounting part 144 includes a flanged end 146 to facilitate mounting of the actuator 190 on fuel injector 100. A feature may also be provided on the injector body 101 to facilitate injector mounting on engine 12. In an embodiment, actuator 190 includes an actuation part 192 secured to flanged end 146 with a cap assembly 194. Cap assembly 194 includes a retainer 196 positioned in and engaged to mounting part 144, and a cap 198 engaged to retainer 196 to secure actuation part 192 between cap 198 and flanged end 146. Actuator 190 also includes an actuated part 200 in actuator mounting part 144 that is engaged to plunger 164.

Actuator 190 controls the opening of the gaseous fuel flow valve assembly 160, including the valve 162. In an embodiment, actuator 190 is an electronic actuator, such as a solenoid, that is electronically controlled by energizing and de-energizing a magnetic coil to actively and selectively control opening and closing for valve 162 of valve assembly 160. In an embodiment, the actuation part 192 is a solenoid, retainer 196 is a stator, and the actuated part 200 is an armature coupled to plunger 164. The actuated part 200 is axially displaced in injector body 101 by actuation part 192 to axially displace plunger 164 away from seat 168 in response to a fuel injection command.

In the illustrated embodiment, plunger 162 includes an axially extending stem 170 that extends from valve assembly receiving part 140 into actuator mounting part 144. Plunger 162 includes a plunger body 172 at a distal end of stem 170. Stem 170 is coupled to the actuated part 200 of actuator 190, such as an armature. Body 172 includes an interior chamber 174 and a plurality of sidewall openings 176 that admit gaseous fuel flow into chamber 174. The distal end of body 172 includes an end face 178 with a seal 180 (FIG. 7), and a central opening 182 around which seal 180 extends. Sidewall openings 176 are in fluid communication with one or more sidewall inlets 148 of valve assembly receiving part 140 to receive gaseous fuel 18 from fuel system 10.

Valve seat 168 is mounted at a distal end of valve assembly receiving part 140. Valve seat 168 includes a seat body 208 with an annular opening 210 that receives gaseous fuel flow when plunger 164 is axially displaced away from valve seat 168. In an embodiment, such as shown in FIG. 7, seat body 208 includes first and second annular projections 212, 214 that are sealing engaged by seal 180 when plunger 164 is in the closed position. Valve seat 168 also includes a flow path 216 from opening 210 to gas outlet 106.

First plunger control mechanism 120 includes a first biasing element 220, such as a coil spring as illustrated in FIG. 6. Biasing element 220 is engaged to actuated part 200, such as an armature and/or plunger 164, and to a spring guide 222 within retainer 196. Biasing element 220 biases plunger 164 distally so that seal 180 sealingly engages against projections 212, 214 of valve seat 168.

In an embodiment of second plunger control mechanism 130, shown more clearly in FIG. 7, a second biasing element 230 is spaced from a flange 184 of plunger 164. Biasing element 230 may be, for example, a washer, plate, disk, a Belleville washer, spring, or other device used in combination with coil spring 220 to provide the desired variable axial forces to resist displacement of plunger 164. In further embodiments, dampening elements, such as viscoelastic dampening elements, may be employed that act in parallel with coil spring 220 and/or biasing element 230.

In an embodiment, a shim or spacer 232 is provided between a distally facing surface 150 of receiving part 140 and biasing element 230. Shim 232 sets the gap 126 in which biasing element 230 is spaced from plunger 164 in the closed position of plunger 164. When plunger 164 is displaced against coil spring 220 to sufficiently to close gap 126, as shown in FIG. 7, flange 184 of plunger 164 contacts biasing element 230 to provide additional resistance to axial displacement of plunger 164. Biasing element 230 also resists or prevents plunger flange 184 from impacting against or rebounding from surface 150 of valve assembly receiving part 140.

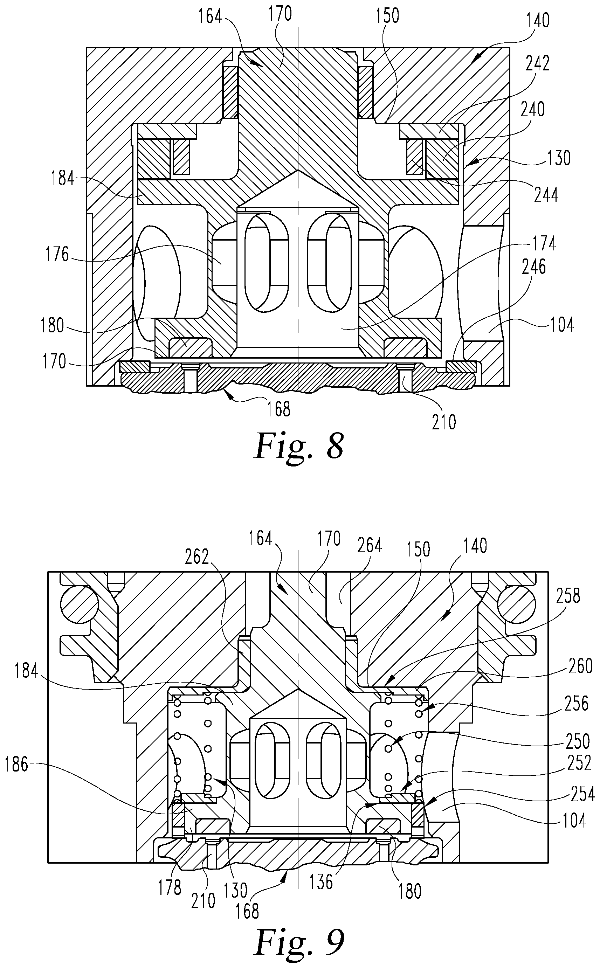

Another embodiment of second plunger control mechanism 130 is shown in FIG. 8. In FIG. 8, second plunger control mechanism 130 includes a second biasing element 240, a first shim 242 that spaces biasing element 240 from distally facing surface 150, a second shim 244 that sets a distance biasing element 240 is able to be compressed relative to its free length, and a third shim 246. In an embodiment, biasing element 240 is a wave spring. In an embodiment, biasing element 240 is a single turn, overlap wave spring.

In an embodiment, first shim 242 sets the minimum air gap between an armature (for example, actuated part 200) and a stator (for example, retainer 196) of actuator 190. In an embodiment, third shim 246 sets the distance plunger 164 is lifted before contacting second biasing element 240, the establishing the gap 126 such as shown in FIG. 2.

In the illustrated embodiment, second shim 244 extends axially from first shim 242 along an inner side of biasing element 240. In other embodiments, second shim 244 is located around the outer side of biasing element 240. When plunger 164 is actuated, flange 184 of plunger 164 first compresses first biasing element 220 of plunger control mechanism 120 to close gap 126. Plunger 164 then contacts second biasing element 240 of second plunger control mechanism 130, and continues to displace away from valve seat 168 by compressing biasing elements 220, 240 until flange 184 contacts second shim 244.

Another embodiment of second plunger control mechanism 130 is shown in FIG. 9. This embodiment includes a second plunger 136 as part of the second plunger control mechanism 130. In FIG. 9, second plunger control mechanism 130 includes a second biasing element 250, and a second plunger 252 in contact with second biasing element 250. Second plunger 252 is a plate in the form of a disc-shaped element with a recessed surface part 266 that receives biasing element 250.

Second plunger control mechanism 130 also includes a first shim 254 in contact with second plunger 252. First shim 254 axially spaces second plunger 252 from a second, distal flange 186 of plunger 164 that is located at or adjacent first end 178 of plunger 164. First shim 254 has a height selected to axially space second plunger 252 from second flange 186 of plunger 164 to establish gap 126. A shim biasing element 256 extends around second plunger 252 and holds first shim 254 in an axial position in valve assembly receiving part 140 of injector body 101. In the illustrated embodiment, second biasing element 250 and shim biasing element 256 are coil springs.

Valve assembly receiving part 140 further includes a plunger guide 258 located in valve assembly receiving part 140. Plunger guide 258 includes a radial portion 260 extending along distally facing surface 150, and an axial portion 262 extending along passage 264 to guide stem 170. Second biasing element 250 and shim biasing element 256 contact radial portion 260 of plunger guide 258. In an embodiment, plunger guide 258 is made from hardened, wear resistant metal material.

During actuation, first plunger 164 is axially displaced from valve seat 164, and displacement is resisted by biasing element 220 alone. Once plunger 264 has been displaced to close gap 126, the proximal end of plunger 264 contacts second plunger 252. Second biasing element 250 then works in conjunction with first biasing element 220 to resist axial displacement of plunger 264 away from valve seat 268.

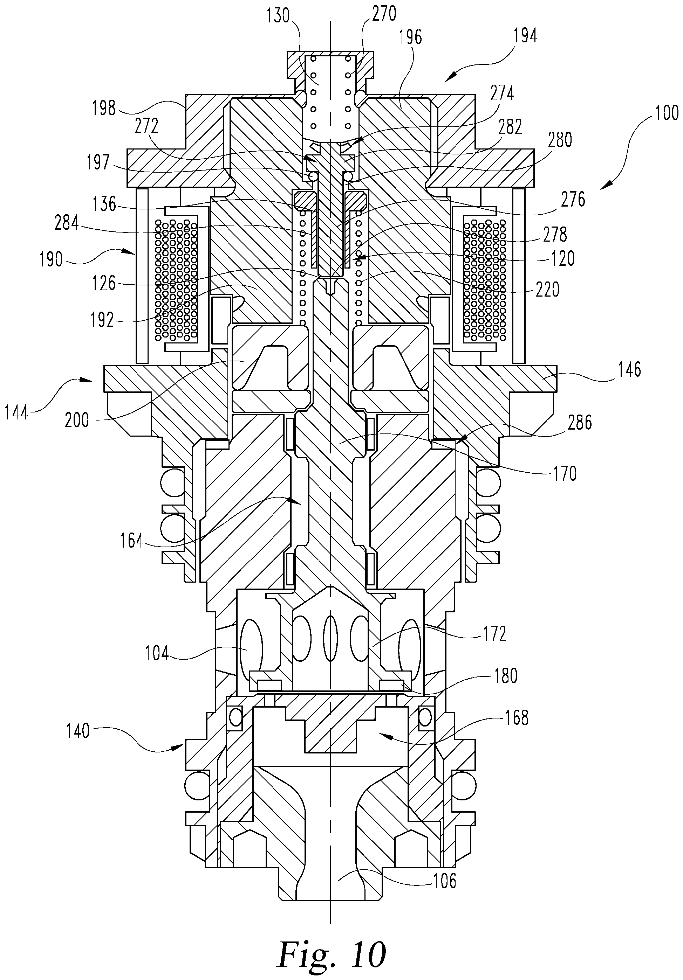

FIG. 10 illustrates another embodiment of fuel injector 100 that includes a second plunger control mechanism 130 with a second plunger 136. In FIG. 10, second plunger control mechanism 130 includes a second biasing element 270, and a second plunger 272 in contact with second biasing element 270. Second plunger 272 is an elongated member with a proximal cap 274 that receives and guides biasing element 270, a stem 276 that extends to a distal end 278, and a flange 282 between stem 276 and cap 274. Distal end 278 is spaced proximally from a proximal end of plunger 164 by gap 126.

Second plunger control mechanism 130 also includes a first shim 280 between flange 282 and an internal lip 197 of retainer 196 that establishes gap 126. Second plunger 272 can be movably supported in an axially fixed upper plunger guide 284. Biasing element 220 of first plunger control mechanism 120 can be positioned between actuated member 220 and plunger guide 284 to bias plunger 164 into contact with seat 168. An optional shim 286 can be provided between valve assembly receiving part 140 actuator mounting part 144 to adjust the minimum axial air gap between actuation part 192 and actuated part 200 of actuator 190.

During actuation, first plunger 164 is axially displaced from valve seat 164, and displacement is resisted by biasing element 220 alone. Once plunger 264 has been displaced to close gap 126, the proximal end of plunger 264 contacts distal end 278 of second plunger 272. Second biasing element 270 then works in conjunction with first biasing element 220 to resist axial displacement of plunger 264 away from valve seat 268.

For the various embodiments disclosed herein, the first and second plunger control mechanisms 120, 130 are configured to increase resistance to displacement of the plunger 164 away from the valve seat 168 during opening of the at least one valve 162. In an embodiment, the first and second plunger control mechanisms 120, 130 are configured to so that second plunger control mechanism 130 incrementally or sequentially engages plunger 164 only when plunger 164 is spaced from seat 168 more than a threshold distance, such as gap 126, while first plunger control mechanism 120 is always actively engaged to plunger 164.

In an embodiment, the first and second plunger control mechanisms 120, 130 are configured to so that second plunger control mechanism 130 supplements resistance to displacement of plunger 164 that is provided by first plunger control mechanism 120 only when plunger 164 is spaced from seat 168 more than a threshold distance, such as gap 126. In an embodiment, the first and second plunger control mechanisms 120, 130 are configured to so that second plunger control mechanism 130 actively engages plunger 164 only when plunger 164 is spaced from seat 168 more than the threshold distance, such as gap 126, while first plunger control mechanism 120 is always actively engaged to plunger 164.

In an embodiment, the first plunger control mechanism 120 is located in the injector body 101 proximally of the second plunger control mechanism 130. In an embodiment, the first plunger control mechanism 120 is located in the injector body 101 distally of the second plunger control mechanism 130.

Further written description of a number of example embodiments shall now be provided. According to one aspect of the present disclosure, a fuel injector is disclosed for providing gaseous fuel to a combustion chamber. The fuel injector includes an injector body defining a fuel passage therein. The fuel passage extends from a gas inlet to a gas outlet of the injector body. The fuel injector includes a valve assembly in the fuel passage. The valve assembly includes at least one valve that is selectively opened and closed to control gaseous fuel flow through the fuel passage to the combustion chamber. The at least one valve includes a valve seat in the fuel passage. The at least one valve also includes a plunger that contacts the valve seat to close the at least one valve, and the plunger is displaced from the valve seat to open the at least one valve. First and second plunger control mechanisms resist displacement of the plunger away from the valve seat. The first and second plunger control mechanisms are configured to increase resistance to displacement of the plunger from the valve seat during opening of the at least one valve based on a distance of the plunger from the valve seat.

In an embodiment, the plunger includes an end face that contacts the valve seat with the at least one valve in the closed position. Only the first plunger control mechanism biases the plunger into contact with the valve seat.

In an embodiment, a gap is formed between the second plunger control mechanism and the plunger with the at least one valve in the closed position. In a further embodiment, the first plunger control mechanism is always coupled to the plunger to bias the plunger toward the closed position against the valve seat and resist displacement of the plunger from the valve seat during opening of the at least one valve. In a further embodiment, the second plunger control mechanism includes a second plunger spaced from the plunger with the at least one valve in the closed position, and a biasing element that resists displacement of the second plunger when the plunger is displaced from the valve seat a sufficient distance to contact the second plunger during opening of the at least one valve.

In an embodiment, an actuator is actuatable to axially displace the plunger to open the at least one valve. The plunger includes a first end and an opposite second end, and the plunger includes a flange adjacent the first end and an elongated stem extending to the second end. The elongated stem of the plunger is engaged to the actuator, and the first plunger control mechanism is engaged between the actuator and the injector body.

In a further embodiment, the second plunger control mechanism includes a second plunger axially spaced from the second end of the plunger when the plunger is in contact with the valve seat. The second end of the plunger contacts the second plunger after displacement of the first end of the plunger away from the valve seat. The second plunger control mechanism also includes a biasing element that resists displacement of the second plunger by the plunger as the plunger moves away from the valve seat.

In a further embodiment, the second plunger control mechanism includes a plate positioned in the fuel passage and a biasing element between the plate and the injector body. The plate is axially spaced from the flange of the plunger when the plunger is in contact with the valve seat. The flange of the plunger contacts the plate after displacement of the first end of the plunger away from the valve seat, and the biasing element resists displacement of the plate by the plunger as the plunger moves away from the valve seat.

In a further embodiment, the second plunger control mechanism is spaced from the flange of the plunger when the plunger is in contact with the valve seat. The first plunger control mechanism resists displacement of the plunger in response to actuation of the actuator to displace the first end of the plunger from the valve seat. The flange contacts the second plunger control mechanism after displacement of the first end of the plunger from the valve seat.

In a further embodiment, the actuator includes an armature, the stem of the plunger is engaged to the armature, and the first plunger control mechanism includes a biasing element engaged to the armature to bias the plunger into contact with the valve seat.

In an embodiment, the second plunger control mechanism is located in the fuel passage and is engaged to the injector body. In an embodiment, the second plunger control mechanism includes at least one of a disc, a Belleville washer, a wave spring, and a coil spring.

According to another aspect of the present disclosure, a valve assembly is disclosed for a fuel injector to selectively provide gaseous fuel flow. The valve assembly includes a valve seat including an opening to allow gaseous fuel flow through the valve seat. The valve assembly also includes a plunger that is movable to engage the valve seat to prevent gaseous fuel flow through opening and to disengage the valve seat to permit gaseous fuel flow through the valve seat. The valve assembly also includes a first plunger control mechanism engaged to the plunger. The first plunger control mechanism is configured to resist displacement of the plunger away from the valve seat during opening of the valve assembly, and to bias the plunger against the valve seat to close the valve assembly. The valve assembly also includes a second plunger control mechanism configured to not resist movement of the plunger from engagement with the valve seat. The second plunger control mechanism engages the plunger after the plunger is displaced away from the valve seat to work with the first plunger control mechanism to resist displacement of the plunger away from the valve seat during opening of the valve assembly.

In an embodiment, the opening of the valve seat is formed by an annular passage between first and second annular projections, and the plunger extends between a first end and an opposite second end. The second end includes an end face, and the end face has an annular seal that sealingly engages the first and second annular projections to close the opening when the plunger is engaged to the valve seat.

In an embodiment, the first plunger control mechanism is a spring that is always engaged to the plunger. In an embodiment, the second plunger control mechanism includes at least one of a disc, a Belleville washer, a wave spring, and a coil spring that is spaced from the plunger when the plunger is engaged to the valve seat and that engages the plunger only after the plunger is displaced away from the valve seat.

In an embodiment, the plunger includes a stem and a plunger body at a distal end of the stem. The first plunger control mechanism is engaged to the stem, and the second plunger control mechanism engages the plunger body to resist displacement of the plunger only after the plunger is displaced away from the valve seat. In an embodiment, a shim supports the second plunger control mechanism in the spaced relationship from the plunger when the plunger is engaged to the valve seat.

In an embodiment, the second plunger control mechanism includes a second plunger that is spaced from the plunger when the plunger is engaged to the valve seat, and a biasing element engaged to the second plunger. The biasing element resists displacement of the second plunger and the plunger in response to the plunger being displaced from the valve seat into contact with the second plunger.

In an embodiment, the second plunger control mechanism includes a plate that is spaced from the plunger when the plunger is engaged to the valve seat, and a biasing element engaged to the plate. The biasing element resists displacement of the plate and the plunger in response to the plunger being displaced from the valve seat into contact with the plate.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

**1.** A fuel injector for providing gaseous fuel to a combustion chamber, the fuel injector comprising:
an injector body defining a fuel passage therein, the fuel passage extending from a gas inlet to a gas outlet of the injector body; and
a valve assembly at least partially located in the fuel passage, the valve assembly including at least one valve that is selectively opened and closed to control gaseous fuel flow through the fuel passage to the combustion chamber, wherein the at least one valve includes:
a valve seat in the fuel passage;
a plunger that contacts the valve seat to close the at least one valve, wherein the plunger is displaced from the valve seat to open the at least one valve; and
a first plunger control mechanism and a second plunger control mechanism that each resist displacement of the plunger away from the valve seat, the first and second plunger control mechanisms being configured to increase resistance to displacement of the plunger from the valve seat during opening of the at least one valve based on a distance of the plunger from the valve seat.

**2.** The fuel injector of claim 1, wherein:
the plunger includes an end face that contacts the valve seat with the at least one valve in the closed position; and
only the first plunger control mechanism biases the plunger into contact with the valve seat.

**3.** The fuel injector of claim 1, wherein a gap is formed between the second plunger control mechanism and the plunger with the at least one valve in the closed position.

**4.** The fuel injector of claim 3, wherein the first plunger control mechanism is always coupled to the plunger to bias the plunger toward the closed position against the valve seat and to resist displacement of the plunger from the valve seat during opening of the at least one valve.

**5.** The fuel injector of claim 3, wherein the second plunger control mechanism includes:
a second plunger spaced from the plunger with the at least one valve in the closed position; and
a biasing element that resists displacement of the second plunger when the plunger is displaced from the valve seat a sufficient distance to close the gap to contact the second plunger during opening of the at least one valve.

**6.** The fuel injector of claim 1, further comprising an actuator that is actuatable to axially displace the plunger to open the at least one valve, wherein:
the plunger includes a first end and an opposite second end, the plunger including at least one flange adjacent the first end and an elongated stem extending to the second end;
the elongated stem of the plunger is engaged to the actuator; and
the first plunger control mechanism is engaged between the actuator and the injector body.

**7.** The fuel injector of claim 6,
wherein the second plunger control mechanism includes:
a second plunger axially spaced from the second end of the plunger when the plunger is in contact with the valve seat, wherein the second end of the plunger contacts the second plunger after displacement of the first end of the plunger away from the valve seat; and
a biasing element that resists displacement of the second plunger by the plunger as the plunger moves away from the valve seat, and/or
wherein the second plunger control mechanism includes:
a plate positioned in the fuel passage, wherein the plate is axially spaced from the at least one flange of the plunger when the plunger is in contact with the valve seat, wherein the at least one flange of the plunger contacts the plate after displacement of the first end of the plunger away from the valve seat; and
a biasing element between the plate and the injector body, wherein the biasing element resists displacement of the plate by the plunger as the plunger moves against the plate and away from the valve seat, and/or
wherein:
the second plunger control mechanism is spaced from the at least one flange of the plunger when the plunger is in contact with the valve seat;
the first plunger control mechanism resists displacement of the plunger in response to actuation of the actuator to displace the first end of the plunger away from the valve seat; and
the flange contacts the second plunger control mechanism after displacement of the first end of the plunger from the valve seat, and/or
wherein:
the actuator includes an armature;
the stem of the plunger is engaged to the armature; and
the first plunger control mechanism includes a biasing element engaged to the armature to bias the plunger into contact with the valve seat.

**8.** The fuel injector of claim 1, wherein the second plunger control mechanism is located in the fuel passage and is engaged to the injector body, and/or
wherein the second plunger control mechanism includes at least one of a disc, a Belleville washer, a wave spring, and a coil spring

**9.** A valve assembly for a fuel injector to selectively provide gaseous fuel flow, the valve assembly comprising:
a valve seat including an opening to allow gaseous fuel flow through the valve seat;
a plunger that is movable to engage the valve seat to prevent gaseous fuel flow through opening, and the plunger is movable to disengage the valve seat to permit gaseous fuel flow through the valve seat;
a first plunger control mechanism engaged to the plunger, the first plunger control mechanism configured to resist displacement of the plunger away from the valve seat during opening of the valve assembly, the first plunger control mechanism further being configured to bias the plunger against the valve seat; and
a second plunger control mechanism configured to not resist movement of the plunger from engagement with the valve seat, the second plunger control mechanism resisting the plunger after the plunger is displaced away from the valve seat to work with the first plunger control mechanism to resist displacement of the plunger away from the valve seat during opening of the at least one valve.

**10.** The valve assembly of claim 9, wherein:
the opening of the valve seat is formed by an annular passage between first and second annular projections of the valve seat; and
the plunger extends between a first end and an opposite second end, and the second end includes an end face, the end face having an annular seal that sealingly engages the first and second annular projections to close the opening when the plunger is engaged to the valve seat.

**11.** The valve assembly of claim 9, wherein the first plunger control mechanism is a spring that is always engaged to the plunger.

**12.** The valve assembly of claim 9,
wherein the second plunger control mechanism includes at least one of a disc, a Belleville washer, a wave spring, and a coil spring that is spaced from the plunger when the plunger is engaged to the valve seat and that engages the plunger only after the plunger is displaced away from the valve seat, and/or
wherein the second plunger control mechanism includes:
a second plunger that is spaced from the plunger when the plunger is engaged to the valve seat; and
a biasing element engaged to the second plunger, the biasing element resisting displacement of the second plunger and the plunger in response to the plunger being displaced from the valve seat into contact with the second plunger, and/or
wherein the second plunger control mechanism includes:
a plate that is spaced from the plunger while the plunger is engaged to the valve seat; and
a biasing element engaged to the plate, the biasing element resisting displacement of the plate and the plunger in response to the plunger being displaced from the valve seat into contact with the plate.

**17.** The valve assembly of claim 13, wherein:
the plunger includes a stem and a plunger body, the plunger body located at a distal end of the stem;
the first plunger control mechanism is engaged to the stem; and
second plunger control mechanism engages the plunger body to resist displacement of the plunger only after the plunger is displaced away from the valve seat.

**18.** The valve assembly of claim 13, further comprising a shim that supports the second plunger control mechanism in a spaced relationship from the plunger while the plunger is engaged to the valve seat.
